# EUROPÄISCHE PATENTANMELDUNG

(11) **EP 0 901 808 A2**
(43) Veröffentlichungstag der Anmeldung: **17.03.1999**
(21) Anmeldenummer: 98116345.4
(22) Anmeldetag: 28.08.1998
(51) Int. Cl.: B01D 53/34, F26B 21/06, F26B 17/02

(54) **Verfahren und Anlage zur Behandlung der Abluft aus thermischen Trocknungsprozessen**

(30) Priorität: 11.09.1997 DE 19739864
(71) Anmelder: LINDAUER DORNIER GESELLSCHAFT M.B.H, D-88129 Lindau (DE)
(72) Erfinder: Rutz, Andreas, Dr., 88131 Lindau (DE); Resch, Karsten, 88138 Weissenberg (DE)

(57) **Zusammenfassung**

Thermisch arbeitende Trockner für Klärschlamm erfordern einen relativ hohen anlagentechnischen und regelungstechnischen Aufwand zur Behandlung der Abluft. Die Erfindung zielt darauf ab, diesen Aufwand zu minimieren, indem Klärschlamm-Trockner unabhängig von Aufbau und Wirkungsweise mit einer Abwasser-Kläranlage kombiniert werden und indem die Abluft (14) der Klärschlamm-Trockner in die Abwasserbecken (18) einer Abwasserkläranlage geleitet wird.

## Beschreibung

Die Erfindung betrifft ein Verfahren zur Behandlung der Abluft aus thermischen Trocknungsprozessen, insbesondere aus Prozessen beim Trocknen von Klärschlamm in Klärschlamm-Trocknern, wonach ein temperierter Prozessgasstrom dem Klärschlamm die Feuchte bis zu einer verbleibenden Restfeuchte entzieht.

Bekannt ist aus der EP 0 593 887 B1 ein Verfahren zum thermischen Trocknen von vorzugsweise in pelletierter Form vorliegendem pastösem Material, insbesondere Klärschlamm, dessen Feuchtigkeit bis zu einer verbleibenden Restfeuchte von einem trockenen unter der Mobilisierungstemperatur von Schlamm-Inhalts- oder Zusatzstoffen liegenden Prozessgasstrom aufgenommen wird.
Innerhalb eines ersten Prozesskreislaufs wird dem Prozessgas die Feuchtigkeit mittels eines Gasentfeuchters entzogen und innerhalb eines zweiten Prozesskreislaufs wird die in dem Gasentfeuchter gebundene Feuchtigkeit selbigen durch erhitztes Regenerationsgas entzogen.
Das temperierte und feuchtebelastete Regenerationsgas wird entweder über eine Desodoriereinrichtung oder direkt an die Atmosphäre abgegeben.
Das Entfeuchten des Prozessgases und des Gasentfeuchters sowie das Reinigen des Regenerationsgases ist mit relativ hohen anlagentechnischen und regelungstechnischen Aufwendungen verbunden. Gleichzeitig erfordert das Verfahren einer solchen Anlage durch den Betreiber einen erheblichen Bedien- und Wartungsaufwand und relativ hohe Betriebskosten.

Aus der AT 393 379 B ist ein Verfahren zur thermischen Behandlung, insbesondere zum Trocknen eines fließfähigen, wasserhaltigen Materials, insbesondere eines Abwasserschlamms bekannt, wonach das vorab kompaktierte bzw. granulierte Material in dem Fließbett eines geschlossenen Fließbettapparates geführt, in welchem das Material mittels eingebauter Heizflächen zum Entstehen eines inerten Gases beheizt wird, das im Wesentlichen Wasserdampf ist, und wobei das Fließbett ausschließlich mit dem Gas fluidisiert wird.
Die den Bedarf der Begasung des Materials übersteigenden Abgase werden aus dem Kontaktfließbetttrockner über einen Leitungszweig abgeführt. In diesem Leitungszweig sind zur Hygenisierung der Abgase ein Zyklon bzw. ein Filter geschaltet und zur Wärmerückgewinnung z.B. ein Kondensator eingebunden.
Zur Hygenisierung und Filterung des Abgases ist ein relativ hoher geräte- und regelungstechmischer Aufwand erforderlich, der zugleich einen gewissen Bedien- und Wartungsaufwand erforderlich macht.

Ein Verfahren zum Trocknen von Klärschlamm ist ferner aus der DE 40 16 100 A1 bekannt, wonach der Klärschlamm in einem säulenartigen Behälter von unten mit temperierter Trocknungsluft durchströmt wird.
Nach dem Durchströmen des Klärschlamms wird die erwärmte und mit Feuchtigkeit beladene Luft von der Oberseite des Behälters über eine Abluftleitung abgeführt, indem in dieser mittels eines Gebläses ein Unterdruck erzeugt wird. Dem Gebläse ist ein Filter nachgeschaltet, der dazu dient, in der Abluft enthaltene Geruchsstoffe und Faulgase von der Umgebung abzuhalten.
Auch dieser technisch recht einfach ausgeführte Klärschlamm-Trockner erfordert zur Behandlung der Trocknerabluft im Sinne der Erzeugung einer umweltverträglichen Abluft geräte- und regelungstechnischen Aufwand sowie Bedien- und Wartungsaufwand.

Ein Verfahren zum Trocknen von z.B. Klärschlamm ist aus der DE 40 13 761 A1 bekannt, wonach der Klärschlamm auf eine luftdurchlässige Fördereinrichtung als schichtförmiges luftdurchlässiges Haufwerk aufgebracht und mittels der Fördereinrichtung durch eine Trockeneinrichtung bewegt wird. In der Trockeneinrichtung wird ein temperierter Trocknungsgasstrom abwechselnd hin- und hergehend durch die Fördereinrichtung und durch das Haufwerk geleitet, um dem Haufwerk Wasser zu entziehen.
Der mit Wasser beladene Trocknungsgasstrom wird aus der Trockeneinrichtung gesaugt und einem Kondensator zugeführt, in dem der Trocknungsgasstrom kondensiert wird. Das anfallende Kondensat, bei dem es sich um Wasser handelt, kann einem Klärwerk zugeführt werden.
Das Verfahren offenbart nicht, wie vermieden wird, dass die in dem Trocknungsgasstrom enthaltenen Geruchsstoffe und Faulgase nicht zu einer Belastung der Umwelt führen. Der Fachmann kann davon ausgehen, dass zumindest im Bereich der Kondensierung des Trocknungsgasstromes Vorkehrungen zu dessen Neutralisierung getroffen sind. Diese Vorkehrungen stellen sich als geräte- und regelungstechnischer Aufwand dar, zu dem noch der Bedien- und Wartungsaufwand hinzukommt.

Bekannt ist des weiteren aus der DE 39 23 020 A1 ein Verfahren zum Entsorgen von klebenden Schlämmen, insbesondere Lackschlämme, die umweltunverträgliche und unter Wärmeeinwirkung verdunstende anorganische Schadstoffe enthalten. Die mit den flüchtigen Schadstoffen beladene temperierte Trocknungsluft wird in eine Nachverbrennungseinrichtung geführt, in der die Schadstoffe verbrannt werden.
Die Beseitigung der flüchtigen anorganischen Schadstoffe, die beim Trocknen von Lackschlämmen von der Trocknungsluft aufgenommen werden, erfordert das Nachverbrennen der Trocknungsluft. Das Nachverbrennen ist kostenaufwendig.

Ausgehend von dem durch die EP 0 593 887 bekannten Stand der Technik, ist es Aufgabe der Erfindung, den anlagentechnischen und regelungstechnischen Aufwand zum Entfeuchten des Prozessgases und zum Reinigen des Regenerationsgases zu vermeiden.

Gelöst wird die Aufgabe durch die Merkmale der unabhängigen Patentansprüche 1 und 5. Vorteilhafte Ausgestaltungen der Erfindung sind in den Unteransprüchen und in dem Ausführungsbeispiel wiedergegeben.
Wesentliches Merkmal der Erfindung nach dem Anspruch 1 ist, dass die mit Feuchte beladene temperierte Abluft in das ungereinigte Wasser einer Abwasserteinigungsanlage geführt wird. Dabei wird die eine Temperatur von < 85 °C aufweisende Abluft in eine Rinne oder in ein Becken mit hinreichendem Abwasservolumen geleitet, in dem die Abluft auf die Temperatur der Abwassertemperatur, die < 30 °C beträgt, gekühlt und die wasserlöslichen, geruchsintensiven Stoffe, wie Ammoniak oder Ammonium aus der Abluft ausgewaschen werden.
Das Einbringen der Abluft in das Abwasser kann dabei auf verschiedenen Wegen erfolgen. Ein bevorzugter Weg kann sein, dass die Abluft über eine der Abwasserreinigungsanlage beigeordnete Belüftungseinrichtung in das Abwasser eingebracht wird. Dies ist deshalb möglich, weil die Abluft einen normalen Sauerstoffanteil von 21 % besitzt, den auch die Luft besitzt, die die Belüftungseinrichtung zur Belüftung des Abwassers verwendet. Als hinreichendes Abwasservolumen wird angesehen, wenn die Abluft in z.B. in einer Tiefe von < 1000 mm unterhalb des Abwasserspiegels im Abwasserbecken eingebracht wird, wodurch anlagenseitig auf energieintensive Lüfter verzichtet werden kann.

Mit der Erfindung wird in vorteilhafter Weise auf die zur Kondensation der Abluftfeuchte und zur Reinigung der Abluft erforderlichen anlagentechnischen und regelungstechnischen Vorkehrungen verzichtet.
Für den Betreiber der Anlage vermindern sich dadurch der Bedien- und Wartungsaufwand und die Betriebskosten. Durch das Einleiten der temperierten und feuchtebelasteten Abluft in das Abwasser einer Kläranlage wird der Prozess der biologischen Klärung zu einer höheren Aktivität angeregt.

Die Erfindung soll nachstehend anhand eines Ausführungsbeispiels näher erläutert werden.

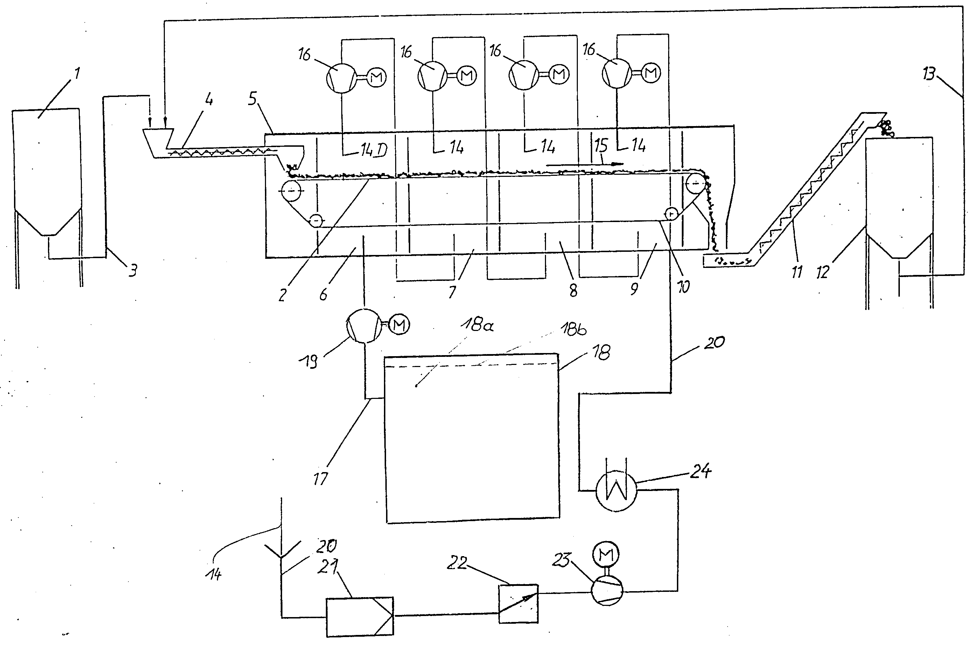

Das in der Zeichnung dargestellte Prozessschaubild zeigt eine Klärschlamm-Trocknungsanlage in Kombination mit dem Abwasserbecken einer Abwasserkläranlage. Der eine Trockensubstanz von etwa 20 Gew. % aufweisende Klärschlamm 2 wird in ein Silo 1 gefordert. Über eine Rohrleitung 3 wird der Klärschlamm 2 einer Zuführvorrichtung 4, die zugleich Pelletiervorrichtung ist, zugeführt. Die Pelletiervorrichtung greift abdichtend in die erste Trocknerzone 6 eines aus mehreren Trocknerzonen 6 bis 9 bestehenden Durchström-Trockners ein. Der zu trocknende Klärschlamm 2 wird einem innerhalb des Trockners 5 endlos umlaufenden Siebband 10 in pelletierter Form aufgegeben und von der Trocknerzone 6 zu den Trocknerzonen 7 bis 9 im Durchlaufverfahren bis zu einer Austragsvorrichtung 11 transportiert. Der getrocknete Klärschlamm 2 verlässt den Trockner 5 mit einer Trockensubstanz von etwa 95 Gew. %.
Ein Silo 12 nimmt den getrockneten Klärschlamm über die Austragvorrichtung 11 auf.
Eine Förderleitung 13 kann vorgesehen sein, um das Silo 12 mit der Zuführ- oder Pelletiervorrichtung 4 zu verbinden.

Der Durchström-Trockner 5 ist derart ausgebildet, dass ein Prozessgasstrom 14 über die Rohrleitung 20, das Filter 21 und ein Stellorgan 22 von einem Ventilator 23 als Frischluft aus der Atmosphäre angesogen und über eine Heizeinrichtung 24 erwärmt der Trockenzone 9 zugeführt wird.
Der Prozessgasstrom 14 durchströmt dabei vorzugsweise, in Abhängigkeit von den sich im Trockner 5 aufbauenden Druckverhältnissen und der Transportrichtung 15 des zu trocknenden Klärschlamms 2 entgegengesetzt und abwechselnd von oben nach unten die einzelnen Trocknerzonen 9 bis 6 und das Siebband 10.
Schließlich verlässt der Prozessgasstrom den Trockner 5 in der Zone 6 als mit hoher Feuchtigkeit angereichertes Prozessgas bei einer Temperatur von etwa 60 bis 85 °C.

Für den notwendigerweise zwangsweisen Prozessgastransport ist jeder Trocknerzone 6 bis 9 ein Ventilator 16 zugeordnet. Das Prozessgas verlässt den Trockner 5 über die Rohrleitung 17.
Gemäß der Erfindung wird die temperierte und feuchtebeladene Abluft über die Leitung 17 in ein mit Abwasser gefülltes Becken 18 einer Abwasserkläranlage geleitet. In die Leitung 17 kann zusätzlich ein Ventilator 19 eingebunden sein, der den Transport der Abluft in Richtung des Abwasserbeckens 18 unterstützt.
Von Vorteil ist dabei, wenn die Abluft in einer relativ geringen Tiefe unterhalb der Oberfläche 18b des Abwassers 18a in das Abwasserbecken 18 der Kläranlage eingebracht wird.

Als wirksam im Hinblick aufden notwendigen Eintragsdruck hat sich erwiesen, wenn die Abluft in einem Abstand von vorzugsweise 300 bis 1000 mm unterhalb der Oberfläche 18b des Abwassers 18a eingebracht wird.

Neben der Einsparung an anlagentechnischen und regelungstechnischen Aufwand und dem damit in Zusammenhang stehenden Bedien- und Wartungsaufwand, wie dieser für bekannte Klärschlamm-Trocknungsanlagen erforderliche ist, kann die Erfindung für jede Art von Klärschlamm-Trocknungsanlagen verwendet werden, in denen die Abluft mit organischen Substanzen belastet ist.

### ZEICHNUNGS-LEGENDE

- 01: Silo
- 02: Klärschlamm
- 03: Rohrleitung
- 04: Zuführ- und Pelletiervorrichtung
- 05: Durchström-Trockner
- 06: Trocknerzone
- 07: Trocknerzone
- 08: Trocknerzone
- 09: Trocknerzone
- 10: Siebband
- 11: Austragsvorrichtung
- 12: Silo
- 13: Förderleitung
- 14: Prozessgasstrom
- 15: Transportrichtung
- 16: Ventilator
- 17: Rohrleitung
- 18: Abwasserbecken
- 18a: Abwasser
- 18b: Oberfläche
- 19: Ventilator
- 20: Rohrleitung
- 21: Filter
- 22: Stellorgan
- 23: Ventilator
- 24: Heizeinrichtung

## Patentansprüche

1. Verfahren zur Behandlung der Abluft aus thermischen Trocknungsprozessen, insbesondere aus Trocknungsprozessen, in Klärschlamm-Trocknungsanlagen, wonach ein temperierter Prozessgasstrom dem Klärschlamm die Feuchte bis zu einer verbleibenden Restfeuchte entzieht und aus der Trocknungsanlage ein temperierter, feuchtebelasteter und umweltbelastender Prozessgasstrom geleitet wird, **dadurch gekennzeichnet,** dass der Prozessgasstrom in das Abwasser einer Abwasserreinigungsanlage geleitet wird.

2. Verfahren zur Behandlung der Abluft aus thermischen Trocknungsprozessen, insbesondere aus Trocknungsprozessen, in Klärschlamm-Trocknungsanlagen, wonach ein temperierter Prozessgasstrom dem Klärschlamm die Feuchte bis zu einer verbleibenden Restfeuchte entzieht und aus der Trocknungsanlage ein temperierter, feuchtebelasteter und umweltbelastender Prozessgasstrom geleitet wird, **dadurch gekennzeichnet,** dass der Prozessgasstrom über die Belüftungseinrichtung einer Abwasserreinigungsanlage in das Abwasser geleitet wird.

3. Verfahren nach Anspruch 1, **dadurch gekennzeichnet,** dass das Prozessgas in ein vor der Klärstufe vorhandenes Abwasser der Abwasserreinigungsanlage eingeleitet wird.

4. Verfahren nach Anspruch 1, **dadurch gekennzeichnet,** dass das Prozessgas in ein mit Abwasser gefülltes Klärbecken geleitet wird.

5. Verfahren nach Anspruch 1 bis 4, **dadurch gekennzeichnet,** dass das Prozessgas in einem Abstand von vorzugsweise weniger als 1000 mm unterhalb der Oberfläche des Abwassers in das Klärbecken geleitet wird.

6. Anlage zur Verfahrensdurchführung nach Patentanspruch 1 oder 2, bestehend aus wenigstens einem Klärschlamm-Trockner (5), der während des Trocknungsprozesses einen temperierten, feuchtebeladenen und umweltbelastenden Prozessgasstrom (14) abgibt, und aus wenigstens einem mit dem wenigstens einen Klärschlamm-Trockner (5) zusammenwirkenden Abwasserbecken (18) zum Klären von im Wesentlichen organische Bestandteile enthaltenden Abwässern (18a) einer Abwasser-Kläranlage.
